# EUROPÄISCHE PATENTANMELDUNG

(11) **EP 1 240 947 A1**
(43) Veröffentlichungstag der Anmeldung: **18.09.2002**
(21) Anmeldenummer: 01128491.6
(22) Anmeldetag: 07.12.2001
(51) Int. Cl.: B05B 7/14

(54) **Pulversprüheinrichtung für Beschichtungspulver**

(30) Priorität: 13.03.2001 DE 10111891
(71) Anmelder: ITW Gema AG, 9015 St. Gallen (CH)
(72) Erfinder: Mauchle, Felix, 9030 Abtwill (CH)
(74) Vertreter: Vetter, Ewald Otto

(57) **Zusammenfassung**

Pulversprühbeschichtungseinrichtung für Beschichtungspulver, welche eine Gesamtluftrate-Regeleinrichtung (22) in einer Gesamtluftleitung (16) und ein Luftraten-Stellglied (46) nur in einer der beiden Leitungen "Förderluftleitung (36) oder Zusatzluftleitung (40)" hat, während die andere dieser beiden Leitungen kein Stellglied enthält.

## Beschreibung

Die Erfindung betrifft eine Pulversprühbeschichtungseinrichtung für Beschichtungspulver gemäß dem Oberbegriff von Anspruch 1.

Demgemäß betrifft die Erfindung eine Pulversprüheinrichtung für Beschichtungspulver, enthaltend einen Injektor als Förderpumpe, welcher einen Förderlufteinlaß für Förderluft zum Ansaugen von Pulver aus einem Pulverbehälter in einen Injektor-Unterdruckbereich und einen Pulverauslaß für das von der Förderluft pneumatisch geförderte Pulver aufweist; eine Gesamtluftleitung; eine Förderluftleitung, welche die Gesamtluftleitung mit dem Förderlufteinlaß des Injektors verbindet; eine Zusatzluftleitung, welche die Gesamtluftleitung mit einem Zusatzlufteinlaß des Injektors zur Zufuhr von Zusatzluft in den Strömungsweg des Pulver-Förderluft-Gemisches verbindet.

Die EP 0 636 420 B1 zeigt eine Pulversprühbeschichtungseinrichtung dieser Art, welche sowohl in der Förderluftleitung als auch in der Zusatzluftleitung je einen Förderluftvolumenrate-Regler enthält. In Abhängigkeit von einem Pulverrate-Sollwert und in Abhängigkeit von einem Pulverrate-lstwert wird unter Verwendung von gespeicherten Diagrammdaten das pro Zeiteinheit geförderte Förderluftvolumen und Zusatzluftvolumen geregelt, um dadurch die Pulverrate (pro Zeiteinheit geförderte Pulvermenge) zu regeln. Das Diagramm enthält eine Pulverrate-Achse, eine Förderluftvolumen-Achse und mehrere Gesamtvolumen-Achsen. Außerdem muß durch einen Computer aus dem Gesamtluftvolumen minus dem Förderluftvolumen das Zusatzluftvolumen errechnet werden, d. h. die jeweilige Luftrate (pro Zeiteinheit geförderte Luftvolumen).

Aus der EP 0 412 289 B1 ist eine Pulversprühbeschichtungseinrichtung bekannt, welche sowohl in der Förderluftleitung als auch in der Zusatzluftleitung je einen Druckregler enthält. In der Gesamtluftzuleitung für diese beiden Zweigleitungen ist ein Durchflußmeßgerät mit optischer Anzeige der Gesamtluftrate (gefördertes Gesamtluftvolumen pro Zeiteinheit). Durch manuelles Einstellen des Förderluft-Druckreglers wird die geförderte Pulvermenge eingestellt. Danach wird am Druckregler der Zusatzluftleitung die Zusatzluft solange nachgeregelt, bis das Durchflußmeßgerät wieder die ursprüngliche Durchflußmenge anzeigt, welche es anzeigte, bevor der Förderluftregler verändert wurde. Damit soll die Benutzung der Pulversprühbeschichtungseinrichtung durch eine Bedienungsperson vereinfacht werden gegenüber der früheren manuellen Benutzung von komplizierten Diagrammen, aus welchen früher die Bedienungsperson die Zusammenhänge zwischen Förderluftdruck, Zusatzluftdruck und Gesamtluftmenge sowie der gewünschten Pulverrate (Pulvermenge g/min.) heraussuchen mußte.

Aus der US 3 625 404 ist ein Verzweigungsventil bekannt, welches einen Druckregler Gesamtlufteinlaß für druckgeregelte Gesamtluft, einen Förderluftauslaß und einen Zusatzluftauslaß aufweist. Es enthält zwei Ventile, denen ein gemeinsamer Ventilkörper zugeordnet ist, welcher das eine Ventil für die Förderluft weiter öffnet, wenn er das Ventil für die Zusatzluft weiter schließt, und umgekehrt.

Sehr kleine Änderungen der Drücke und der Verhältnisse der Drücke in der Förderluftleitung und in der Zusatzluftleitung können bereits unerwünscht große Veränderungen der pro Zeiteinheit geförderten Pulvermenge zur Folge haben, im folgenden Pulverrate genannt. Die Pulvermenge wird normalerweise in g/min definiert, könnte aber auch in Volumen pro Zeiteinheit definiert werden. Alle Luftmenge werden sinnvollerweise in Luftvolumen definiert. Deshalb werden im folgenden alle pro Zeiteinheit geförderten Luftvolumen als Luftraten bezeichnet.

Änderungen des Strömungswiderstandes des Pulver-Luft-Gemisch-Stromes können in der Praxis auftreten durch Austauschen eines Pulverschlauches zwischen dem Injektor und einer Sprühvorrichtung, Austauschen des Injektors oder durch Austausch des Sprühorgans der Sprühvorrichtung. Die Sprühvorrichtung kann eine von Hand gehaltene, sogenannte manuelle Sprühpistole mit oder ohne Pistolengriff, oder eine automatische Sprühpistole sein. Das Sprühorgan der Sprühvorrichtung kann eine Sprühdüse oder ein Rotationszerstäuberkörper sein.

Die Luft ist nur ein Hilfsmedium zum pneumatischen Fördern des Pulvers. Der Pulverstrom muß eine bestimmte Mindestgeschwindigkeit haben und damit auch eine bestimmte Mindestmenge an Luft, damit sich auf dem Pulverweg keine Pulverpartikel ablagern könne. Bei Geschwindigkeiten des Pulver-Luft-Gemisches von weniger als 10 bis 15 m/sek. entstehen Pulstationen des Pulver-Luft-Gemischstromes. Andererseits ist eine große Menge Luft unerwünscht, weil dies Energie benötigt und die Gefahr besteht, dass die Luft das Pulver von dem zu beschichtenden Objekt wegbläst. Ein Praxiswert für die Pulverrate ist 300 g/min.

Durch die Erfindung soll die Aufgabe gelöst werden, die Pulversprühbeschichtungseinrichtung nach der EP 0 636 420 B1 zu vereinfachen, preiswerter zu gestalten und eine schnellere Regeldynamik zu erzielen, ohne auf die Vorteile verzichten zu müssen, dass sich Strömungswiderstände im Pulver-Luft-Gemisch-Strömungsweg nicht nachteilig auf den Pulverrate-lstwert auswirken.

Diese Aufgabe wird gemäß der Erfindung durch die kennzeichnenden Merkmale von Anspruch 1 gelöst.

Durch die Erfindung werden die Förderluft und die Zusatzluft voneinander "entkoppelt" in der Weise, dass nur noch für eine von beiden ein Stellglied benötigt wird und trotzdem bei allen Einstellungen von verschiedenen Pulverrate-Sollwerten die Gesamtluftmenge automatisch konstant gehalten wird. Die Sollwerte des Stellgliedes und der Gesamtluftrate-Regeleinrichtung können konstant oder variabel sein. Gemäß der Erfindung wird nur noch in einer der beiden Zweigleitungen "Förderluftleitung oder Zweigluftleitung" ein Stellglied zur Veränderung und Einstellung des Strömungswiderstandes dieser Zweigleitung benötigt, jedoch nicht mehr in der anderen Zweigleitung. Die andere Zweigleitung benötigt überhaupt keinerlei Einstellelemente, weder ein Stellglied noch einen Druckregler oder einen Volumenstromregler. Die beiden Zweigleitungen sollten vorzugsweise keinen Luft-Druckregler und keinen Luft-Volumenstromregler enthalten.

Durch die Erfindung wird die Pulversprühbeschichtungseinrichtung wesentlich vereinfacht und verbilligt. Es werden weniger Komponenten benötigt und diese sind einfacher steuerbar und einfacher regelbar. Ferner ergibt sich eine schnellere Regeldynamik als beim Stand der Technik.

Weitere Merkmale der Erfindung sind in den Unteransprüchen enthalten.

Das Stellglied und damit die Größe seines Strömungsdurchtrittsquerschnittes kann manuell einstellbar ausgebildet sein. Gemäß bevorzugter Ausführungsform der Erfindung ist jedoch ein Regler vorgesehen, welcher das Stellglied in Abhängigkeit von einem Pulverrate-Sollwert an einem Pulverrate-Sollwerteingang und in Abhängigkeit von einem Pulverrate-lstwert eines Pulverrate-Istwert-Sensors betätigt, der in Abhängigkeit von der pro Zeiteinheit geförderten Pulvermenge (Masse oder Volumen) ein Pulverrate-lstwert-Signal erzeugt.

Das Stellglied kann entweder in der Föderluftleitung oder in der Zusatzluftleitung angeordnet sein.

Gemäß einer besonderen Ausführungsform der Erfindung ist das Stellglied von der Art eines Ventils, eines Hahns, einer Strömungsdrossel oder einer Strömungsblende, dessen bzw. deren Strömungsdurchtritts-Querschnittsgröße einstellbar ist.

Das Stellglied ist in Kombination mit einem Regler, von welchem es in Abhängigkeit von einem Pulverrate-Sollwert und einem Pulverrate-Istwert eingestellt wird, ein Volumenstromsteller. Der Volumenstromsteller stellt die Strömungsdurchtritts-Querschnittsgröße und damit den Strömungswiderstand der betreffenden Zweigleitung (Förderluftleitung oder Zusatzluftleitung) ein. Daraus ergibt sich ein bestimmter Luftvolumenstrom, der automatisch auch vom Strömungswiderstand in der anderen Zweigleitung und von der vorgegebenen Gesamtluftrate abhängig ist.

Theoretisch kann als Stellglied auch ein Druckregler verwendet werden, jedoch ist ein Druckregler regelungstechnisch ungünstig, weil er den Strömungsquerschnitt druckabhängig verändert.

Die Erfindung wir im folgenden mit Bezug auf die Zeichnungen anhand von bevorzugten Ausführungsformen als Beispiele beschrieben.
In den Zeichnungen zeigen
Fig. 1 schematisch eine Pulversprüheinrichtung nach der Erfindung,
Fig. 2 schematisch eine weitere Ausführungsform einer Pulversprüheinrichtung nach der Erfindung,
Fig. 3 eine besondere Ausführungsform einer Gesamtluftrate-Regeleinrichtung der Pulversprüheinrichtungen von Fig. 1 und 2,
Fig. 4 eine weitere besondere Ausführungsform der Gesamtluftrate-Regeleinrichtung der Pulversprüheinrichtungen von Fig. 1 und 2,
Fig. 5 eine weitere Ausführungsform einer Pulversprüheinrichtung nach der Erfindung ähnlich Fig. 1,
Fig. 6 eine weitere Ausführungsform der Pulversprüheinrichtung nach der Erfindung ähnlich Fig. 2.

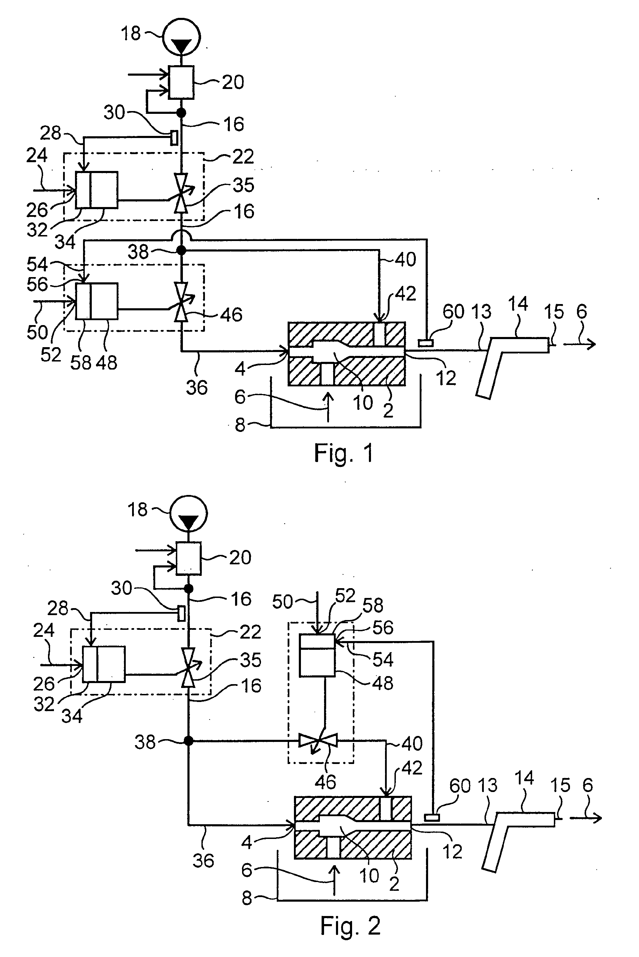

Die Pulversprüheinrichtung nach der Erfindung für Beschichtungspulver enthält entsprechend Fig. 1 einen Injektor 2, welcher einen Förderlufteinlaß 4 für Förderluft zum Ansaugen von Pulver 6 aus einem Pulverbehälter 8 in einen Injektor-Unterdruckbereich 10 und einen Pulverauslaß 12 für das von der Förderluft pneumatisch geförderte Pulver aufweist. Das Pulver 6 kann von dem Injektor 2 pneumatisch durch einen Pulverschlauch 13 in einen anderen, nicht gezeigten, Pulverbehälter oder zu einer Sprühvorrichtung 14 gefördert werden, welche das Pulver auf einen zu beschichtenden Gegenstand sprüht und hierfür eine Sprühdüse oder einen Rotationszerstäuber enthält. Vorzugsweise hat die Sprühvorrichtung 14 auch mindestens eine Hochspannungs-Elektrode 15 zum elektrostatischen Aufladen des Pulvers 6.

Eine Gesamtluftleitung 16 ist an eine Druckluftquelle 18 angeschlossen und enthält in Strömungsrichtung der Gesamtluft, welche von der Druckluftquelle 18 geliefert wird, nacheinander einen Gesamtluft-Druckregler 20 und eine Gesamtluftrate-Regeleinrichtung 22. Die Gesamtluftrate-Regeleinrichtung 22 regelt die pro Zeiteinheit geförderte Gesamtluftmenge, beispielsweise das Gesamtluftvolumen, und hält diese Gesamtluftrate in Abhängigkeit von einem Gesamtluftrate-Sollwert 24 an einem Gesamtluftrate-Sollwerteingang 26 und in Abhängigkeit von einem Gesamtluftrate-Istwert 28 eines Gesamtluftrate-lstwert-Sensors 30 im wesentlichen konstant. Sollwert 24 und Istwert 28 der Gesamtluftrate werden in regelungstechnisch üblicher Weise bei 32 miteinander verglichen. Durch einen Gesamtluftregler 34 wird in Abhängigkeit vom Vergleichsergebnis ein Gesamtluftrate-Stellglied 35 betätigt. Der Gesamtluftrate-lstwert-Sensor 30 kann stromaufwärts oder stromabwärts des Gesamtluftrate-Stellgliedes 35 in oder an der Gesamtluftleitung 16 angeordnet sein, abhängig von der Art der Gesamtluftrate-Regeleinrichtung 22.

Eine Förderluftleitung 36 verbindet die Gesamtluftleitung 16 an einer stromabwärts der Gesamtluftrate-Regeleinrichtung 22 gelegenen Verzweigungsstelle 38 mit dem Förderlufteinlaß 4 des Injektors 2.

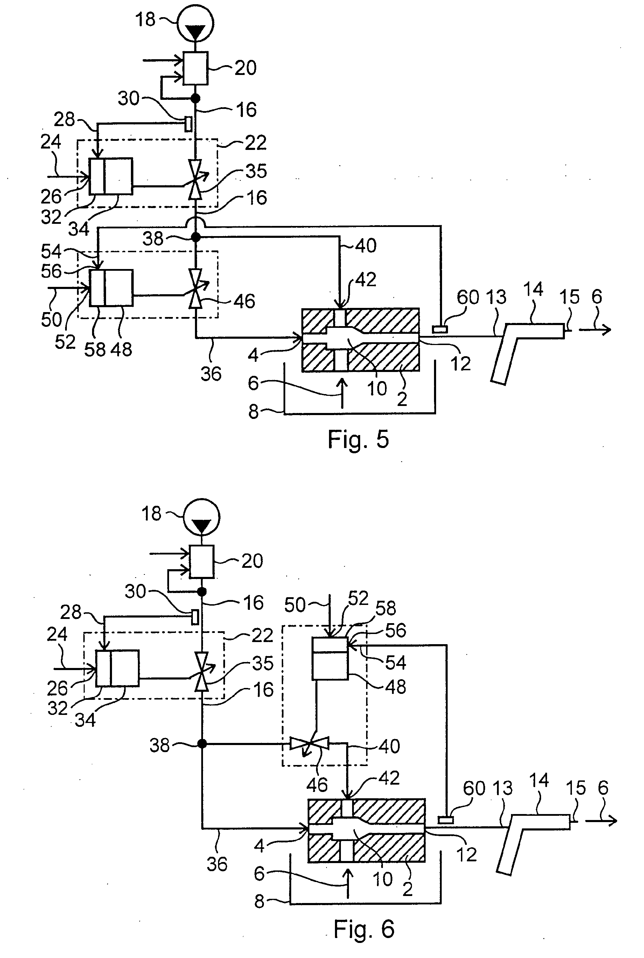

Eine Zusatzluftleitung 40 verbindet die Gesamtluftleitung 36 an einer stromabwärts von der Gesamtluftrate-Regeleinrichtung 22 gelegenen Verzweigungsstelle 38 mit einem Zusatzlufteinlaß 42 des Injektor 2 zur Zufuhr von Zusatzluft aus der Gesamtluftleitung 16 in den Strömungsweg des Pulver-Förderluft-Gemisches vorzugsweise an einer Stelle so weit stromabwärts von dem Injektor-Unterdruckbereich 10, dass die Zusatzluft keinen Einfluß auf den Unterdruck in diesem Unterdruckbereich 10 hat. Der Zusatzlufteinlaß 42 muß jedoch so nahe bei dem Injektor-Unterdruckbereich sein, dass die Zusatzluft helfen kann, Pulverablagerungen im Strömungsweg des Pulver-Föderluft-Gemisches zu verhindern. Der Zusatzlufteinlaß 42 "des Injektors" kann sich somit innerhalb des Injektors 2 oder außerhalb von ihm nahe bei seinem stromabwärtigen Ende befinden. Ausführungen, bei welchen der Zusatzlufteinlaß 42 in den Injektor-Unterdruckbereich 10 mündet, werden später mit Bezug auf die Fig. 5 und 6 beschrieben. Die Verzweigungsstelle 38 kann für die Förderluftleitung 36 und die Zusatzluftleitung 40 die gleiche sein.

Von der Gesamtluftrate-Regeleinrichtung 22 wird die durch die Gesamtluftleitung 16 strömende Gesamtluftrate (Luftmenge, z. B. Luftvolumen, pro Zeiteinheit) konstant gehalten.

In einer der beiden Zweigleitungen "Förderluftleitung 36 oder Zuluftleitung 40" ist ein Zweigleitungs-Stellglied 46 zur Veränderung und Einstellung des Strömungswiderstandes dieser Zweigleitung angeordnet. Dieses Zweigleitungs-Stellglied 46 hat einen in der Größe veränderbaren Luftdurchlaß-Strömungsquerschnitt. Durch Einstellen der Größe dieses Strömungsdurchtrittsquerschnittes wird der Strömungswiderstand in der zugehörigen Zweigleitung eingestellt, und damit auch das Strömungs-Widerstandsverhältnis der beiden Zweigleitungen 36 und 40 relativ zueinander. Die Luftraten (Luftmenge, vorzugsweise Volumen pro Zeiteinheit), welche durch die beiden Zweigleitungen strömen können, verhalten sich umgekehrt zu den Strömungswiderständen. Je kleiner der Widerstand ist, desto größer ist die Luftrate der betreffenden Zweigleitung 36 bzw. 40. Dies bedeutet, dass nur in einer der beiden Zweigleitungen 36 und 40 ein Zweigleitungs-Stellglied 46 erforderlich ist, während die andere Zweigleitung 40 oder 36 überhaupt kein Stellglied benötigt und vorzugsweise auch keines enthält. Die Aufteilung der Zweigleitungs-Luftraten ist automatisch stets vom Strömungswiderstandsverhältnis der beiden Zweigleitungen abhängig, und die Luftraten in den beiden Zweigleitungen 36 und 40 sind zusätzlich von der Gesamtluftrate abhängig, welche von der Gesamtluftrate-Regeleinrichtung 22 der Gesamtluftleitung 16 konstant gehalten wird.

In Fig. 1 ist das Zweigleitungs-Stellglied 46 in der Förderleitung 36 angeordnet. Die Zusatzluftleitung 40 ist demzufolge völlig frei von Strömungseinstellelementen. Das Zweigleitungs-Stellglied 46, in Fig. 1 in der Förderluftleitung 36, kann gemäß einer Ausführungsform manuell einstellbar sein und mit einer optisch lesbaren Skala versehen sein, auf welcher zweckmäßiger Weise nicht die einstellbaren Größen des Strömungsdurchtrittsquerschnittes aufgetragen sind, sondern vorzugsweise die vom Injektor 2 förderbaren Pulverrate-Sollwerte, oder einem Pulverrate-Bereich entsprechende Prozentwerte.

Gemäß der bevorzugten Ausführungsform ist das Zweigleitungs-Stellglied 46 von einem Regler 48 in Abhängigkeit von einem Pulverrate-Sollwert 50 an einem Pulverrate-Sollwerteingang 52 und in Abhängigkeit von einem Pulverrate-lstwert 54 an einem Pulverrate-lstwerteingang 56 einstellbar. Das Pulverrate-lstwert-Signal 54 wird von einem Pulverrate-lstwert-Sensor 60 erzeugt, welcher im oder in der Nähe des Injektors 2, am oder im Strömungsweg des Pulvers 6 angeordnet ist. Die Soll- und Istwerte 50 und 54 der Pulverrate werden bei 58 miteinander verglichen. Der Pulverrate-Regler 48 stellt jeweils in Abhängigkeit von diesem Vergleichsergebnis das Zweigleitungs-Stellglied 46 ein.

Der Pulverrate-Sollwerteingang 52 kann ein manueller Eingang oder ein elektronischer Eingang zur automatischen Eingabe von einem gewünschten Pulverrate-Sollwert sein. Ebenso kann der Gesamtluft-Sollwerteingang 26 der Gesamtluft-Reglereinrichtung 22 ein manueller Eingang oder ein elektronischer Eingang zur automatischen Eingabe von Gesamtluftrate-Sollwerten sein. Automatische Sollwerteingänge 52 und 26 ermöglichen eine vollautomatische Steuerung der Sprühbeschichtungseinrichtung in Abhängigkeit von den zu beschichtenden Gegenständen.

Es ist ersichtlich, dass die beiden Zweigleitungen "Föderluftleitung 36 und Zusatzluftleitung 40" regelungstechnisch völlig voneinander getrennt sind in der Weise, dass nur die eine von ihnen ein Stellglied 46 benötigt.

Die Luftraten sind Luftmenge pro Zeiteinheit, vorzugsweise Luftvolumen pro Zeiteinheit. Die Pulverraten sind Pulvermengen pro Zeiteinheit, vorzugsweise Pulvermassen, z. B. g/min, oder aber Volumen pro Zeiteinheit.

Je weiter in Fig. 1 das Stellglied 46 in der Förderluftleitung 36 geöffnet wird, desto mehr Förderluft strömt durch diese Förderluftleitung 36, während durch die Zusatzluftleitung 40 entsprechend weniger Zusatzluft hindurchströmt. Umgekehrt, je mehr das Stellglied 46 in der Förderluftleitung 36 geschlossen wird, desto weniger Förderluft strömt durch die Förderluftleitung 36, während entsprechend mehr Zusatzluft durch die Zusatzluftleitung 40 strömt.

Im folgenden werden bezüglich der Figuren 2 bis 6 nur die Unterschiede zu Fig. 1 beschrieben, da alle anderen Merkmale und Funktionen von Fig. 1 auch bei diesen Fig. 2 bis 6 vorhanden sind.

In Fig. 2 befindet sich das Zweigleitungs-Stellglied 46 in der Zusatzluftleitung 40, und die Förderluftleitung 36 benötigt deshalb kein Einstellelement und hat vorzugsweise auch kein Einstellelement. Je weiter das Stellglied 46 der Zusatzluftleitung 40 geöffnet wird, desto mehr Zusatzluft strömt hindurch, während entsprechend weniger Förderluft durch die Förderluftleitung 36 strömt. Je weiter das Stellglied 46 der Zusatzluftleitung 40 geschlossen wird, desto weniger Zusatzluft strömt durch die Zusatzluftleitung 40, während entsprechend mehr Förderluft durch die Förderluftleitung 36 strömt.

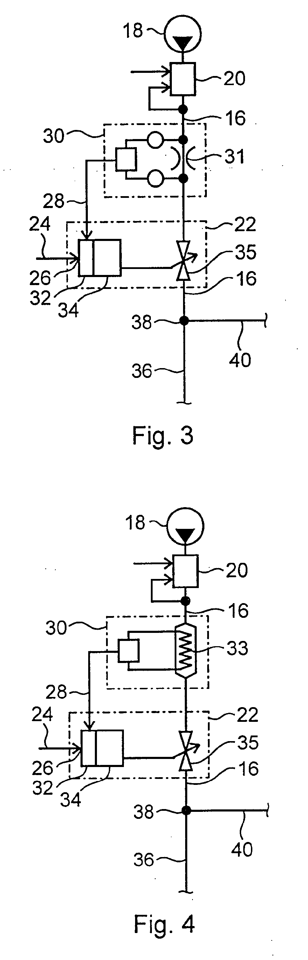

Bei der besonderen Ausführungsform einer Gesamtluftrate-Regeleinrichtung 22 von Fig. 3 ist der Gesamtluftrate-lstwert-Sensor 30 ein Differenzdruckmeßer, welcher ein Durchflußvolumenrate-lstwert-Signal bildet durch Differenzdruckmeßung über einem definierten Strömungswiderstand 31, z. B. einer Drossel oder einer Normblende, in der Gesamtluftleitung 16 stromaufwärts des Gesamtluft-Stellgliedes 35.

Fig. 4 zeigt eine Ausführungsform der Gesamtluftrate-Regeleinrichtung 22, bei welcher der Gesamtluft-Istwert-Sensor 30 ein Gesamtluftvolumenrate-lstwert-Signal mit Hilfe eines elektrischen Hitzdrahtes 33 erzeugt, der sich in der Gesamtluftleitung 36 im Strömungsweg der Gesamtluft befindet und dadurch mehr oder weniger stark abgekühlt wird in Abhänigigkeit von der pro Zeiteinheit an ihm vorbeiströmenden Gesamtluftmenge. Der Gesamtluft-Istwert-Sensor 30 und sein Hitzdraht 33 können entsprechend Fig. 4 stromaufwärts des Gesamtluft-Stellgliedes 35 oder stromabwärts von diesem Stellglied 35 angeordnet sein.

Fig. 5 entspricht Fig. 1, mit dem Unterschied, dass der Zusatzlufteinlaß 42 in den Injektor-Unterdruckbereich 10 mündet.

Fig. 6 ist identisch mit Fig. 2, mit dem Unterschied, dass der Zusatzlufteinlaß 42 in den Injektor-Unterdruckbereich 10 mündet.

Während in den Fig. 1 und 2 die Zusatzluftrate keinen oder nur geringen Einfluß auf die Pulverrate hat, und die Pulverrate im wesentlichen von der Förderluftrate der Förderluftleitung 36 bestimmt wird, hat in den Fig. 5 und 6 die Zusatzluftrate einen Einfluß auf die Größe des Unterdruckes im Injektor-Unterdruckbereich 10 und damit auch einen Einfluß auf die im Unterdruckbereich von der Förderluft der Förderluftleitung 36 angesaugte Pulverrate. Injektoren 2 nach den Fig. 1 und 2 sind ebenso Stand der Technik wie Injektoren 2 nach den Fig. 5 und 6.

## Patentansprüche

1. Pulversprüheinrichtung für Beschichtungspulver, enthaltend einen Injektor (2) als Förderpumpe, welcher einen Förderlufteinlaß (4) für Förderluft zum Ansaugen von Pulver aus einem Pulverbehälter (8) in einen Injektor-Unterdruckbereich (10) und einen Pulverauslaß (12) für das von der Förderluft pneumatisch geförderte Pulver aufweist; eine Gesamtluftleitung (16); eine Förderluftleitung (36), welche die Gesamtluftleitung mit dem Förderlufteinlaß (4) des Injektors (2) verbindet; eine Zusatzluftleitung (40), welche die Gesamtluftleitung (16) mit einem Zusatzlufteinlaß (42) des Injektors (2) zur Zufuhr von Zusatzluft in den Strömungsweg des Pulver-Förderluft-Gemisches verbindet;
**dadurch gekennzeichnet,**
**dass** in der Gesamtluftleitung (16), stromaufwärts von der Förderluftleitung (36) und stromaufwärts von der Zusatzluftleitung (40), eine Gesamtluftrate-Regeleinrichtung (22) zur Regelung des pro Zeiteinheit geförderten Volumens von Gesamtluft angeordnet ist; dass in einer der beiden Zweigleitungen "Förderleitung (36) oder Zusatzluftleitung (40)" ein Zweigleitungs-Stellglied (46) zur Veränderung und Einstellung des Strömungswiderstandes dieser Zweigleitung angeordnet ist, wobei der Strömungswiderstand der anderen Zweigleitung (40 oder 36) unabhängig von Einstellungen dieses Zweigleitungs-Stellgliedes (46) und unabhängig von Einstellungen der Gesamtluftrate an der Gesamtluftrate-Regeleinrichtung (22) ist, so dass das Verhältnis der Luftraten in den beiden Zweigleitungen (36, 40) relativ zueinander allein durch das eine Zweigleitungs-Stellglied (46) bestimmbar ist und die Gesamtluftrate für beide Zweigleitungen (36, 40) zusammen allein durch die Gesamtluftrate der Gesamtluftrate-Regeleinrichtung (22) bestimmbar ist.

2. Pulversprühbeschichtungseinrichtung nach Anspruch 1,
**dadurch gekennzeichnet,**
**dass** die Förderluftleitung (36) die mit dem Zweigleitungs-Stellglied (46) versehene Zweigleitung ist.

3. Pulversprühbeschichtungseinrichtung nach Anspruch 1,
**dadurch gekennzeichnet,**
**dass** die Zusatzluftleitung (40) die mit dem Zweigleitungs-Stellglied (46) versehene Zweigleitung ist.

4. Pulversprühbeschichtungseinrichtung nach einem der vorhergehenden Ansprüche,
**dadurch gekennzeichnet,**
**dass** das Stellglied von der Art "eines Ventils, eines Hahns, einer Strömungsdrossel oder einer Strömungsblende" ist, dessen bzw. deren Strömungsdurchtritts-Querschnittsgröße einstellbar ist.

5. Pulversprühbeschichtungseinrichtung nach einem der vorhergehenden Ansprüche,
**dadurch** gekennzeichne**t ,**
dass ein Regler (48) vorgesehen ist, welcher das Zweigleitungs-Stellglied (46) in Abhängigkeit von einem Pulverrate-Sollwert (52) an einem Puiverrate-Sollwerteingang (50) und in Abhängigkeit von einem Pulverrate-lstwert (54) eines Pulverrate-lstwert Sensors (60) betätigt, der in Abhängigkeit von der pro Zeiteinheit geförderten Pulvermenge ein Pulverrate-lstwert-Signal erzeugt.

6. Pulversprühbeschichtungseinrichtung nach einem der Ansprüche 1 bis 4,
**dadurch gekennzeichnet,**
**dass** die Größe des Strömungsdurchtrittsquerschnittes des Zweigleitungs-Stellgliedes (46) manuell einstellbar ist.
